# EUROPÄISCHE PATENTANMELDUNG

(11) **EP 0 826 610 A1**
(43) Veröffentlichungstag der Anmeldung: **04.03.1998**
(21) Anmeldenummer: 97112658.6
(22) Anmeldetag: 24.07.1997
(51) Int. Cl.: B65F 7/00, B01D 53/04

(54) **Müllbehälter mit einem im Deckel angeordneten Filter**

(30) Priorität: 30.07.1996 DE 29613202 U
(71) Anmelder: Störk-Küfers, Paul, 78576 Emmingen (DE)
(72) Erfinder: Störk, Hans, 78576 Emmingen (DE)
(74) Vertreter: Weiss, Peter, Dr. rer. nat.

(57) **Zusammenfassung**

Bei einem Behältnis zur Aufnahme von insbesondere biologischen Abfallstoffen mit einem Deckel (1) und einem Filter (F) ist an der Innenseite des Deckels (1) ein Gehäuse (2) angebracht, welches Filtermaterial (7) beinhaltet und über Öffnungen (9) mit dem Inneren des Behälters und über weitere Öffnungen (8) durch den Deckel (1) hindurch mit der Außenluft in Verbindung steht.

## Beschreibung

Die Erfindung betrifft ein Behältnis zur Aufnahme von insbesondere biologischen Abfallstoffen mit einem Deckel und einem Filter.

Insbesondere Abfallbehälter sind heute mit einem Filter ausgestattet, der die durch die biologischen Abfälle entstehenden, störenden Gerüche beseitigen soll. So kann bspw. das ganze Behältnis mit gas- oder dampfdurchläßigem Material ausgekleidet und zudem mit Aktivkohlegranulat gefüllt sein, das die Geruchsstoffe absorbiert. Es ist auch möglich, eine Geruchsabsaugvorrichtung am Boden dieses Behälters anzubringen, welche die Geruchsstoffe absaugt. Diese Geruchsstoffe gelangen in einen Geruchsfilter und enden schließlich in einem dafür vorgesehenen Abfallbeutel.

Die DE 42 39 191 beschreibt eine im oberen Bereich eines Sammelbehälters angeordnete Entlüftungsöffnung und einen vor der Entlüftungsöffnung des Sammelbehälters angeordneten Biofilter. Der Schadstoffabbau erfolgt durch Mikroorganismen, die auf einem festen Träger angesiedelt sind. Sie können dort immobilisiert sein oder werden nachträglich nachgeimpft. Dieses Verfahren ist sehr aufwendig und wird auch dadurch nicht vereinfacht, daß ein Feuchtmaterial im Randbereich des Filterbettes immerzu mit Wasser getränkt werden muß, damit es genügend Wasser an das Filterbett abgeben kann.

Der Erfindung liegt die Aufgabe zugrunde, einen normalen Abfalleimer mit einem Filter für die mit Geruchsstoffen belasteten Luft auf einfache Weise auszustatten.

Zur Lösung dieser Aufgabe führt, daß an der Innenseite des Deckels ein Gehäuse angebracht ist, welches Filtermaterial beinhaltet und über Öffnungen mit dem Inneren des Behälters und über weitere Öffnungen durch den Deckel hindurch mit der Außenluft in Verbindung steht.

Das Gehäuse besteht aus vier Seitenwänden, an deren jeweiligen unteren Randkanten Rastelemente angeordnet sind. Eine Bodenplatte, welche die vier Seitenwände miteinander verbindet, wird mittels dieser Rastelemente in seiner Lage gehalten. Die Bodenplatte wird nicht fest an den Seitenwänden montiert, da sie jederzeit entfernbar sein muß, wenn das Filtermaterial ausgetauscht werden soll.

Um das Filtern der Geruchsstoffe aus der Luft zu bewirken, ist das Filtermaterial aus einem Material hergestellt, welches die Geruchsstoffe absorbiert und nur die Frischluft durchläßt. Ein solches Material kann bspw. Aktivkohlegranulat, Wurzelholz od.dgl. sein.

Ein Material der o.g. Art ist gleichzeitig gut wasseraufsaugend. So kann das bei Regenfällen od.dgl. durch die Öffnungen im Deckel eintretende Wasser gut aufgesaugt werden. Damit das Wasser aber nicht durch die Öffnungen in der Bodenplatte wieder austritt und in den Behälter fließt, sind diesen Öffnungen nach innen hochgezogene Hülsen aufgesetzt. Dadurch wird eine Art Wasserrückhaltesystem gebildet. Der größte Teil des Wassers sammelt sich zwischen diesen hochgezogenen Hülsen und kann nicht in den Behälter gelangen. Um das gespeicherte Wasser aber auch wieder aus dem Gehäuse zu bekommen, muß der Deckel lediglich geöffnet werden. Dadurch fließt das Wasser aus den Deckelöffnungen, zumal dieser meist schalenartig ausgebildet ist.

Dieses Filtergehäuse an der Innenseite des Deckels bildet ein zusätzliches Gewicht am Deckel, d.h., der Deckel kann besser und auch dichter schließen, so daß nicht etwa Geruchstoffe das Gehäuse mit dem Filtermaterial umgehen und durch eventuelle Schlitze zwischen Deckel und Behälterrand dringen.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
Fig. 1 einen teilweise aufgebrochen dargestellten Abfalleimer mit einem erfindungsgemäßen Filter am Deckel;
Fig. 2 eine Draufsicht auf die Oberseite des Deckels gemäß Fig. 1;
Fig. 3 eine Unteransicht des Filters gemäß Fig. 1.

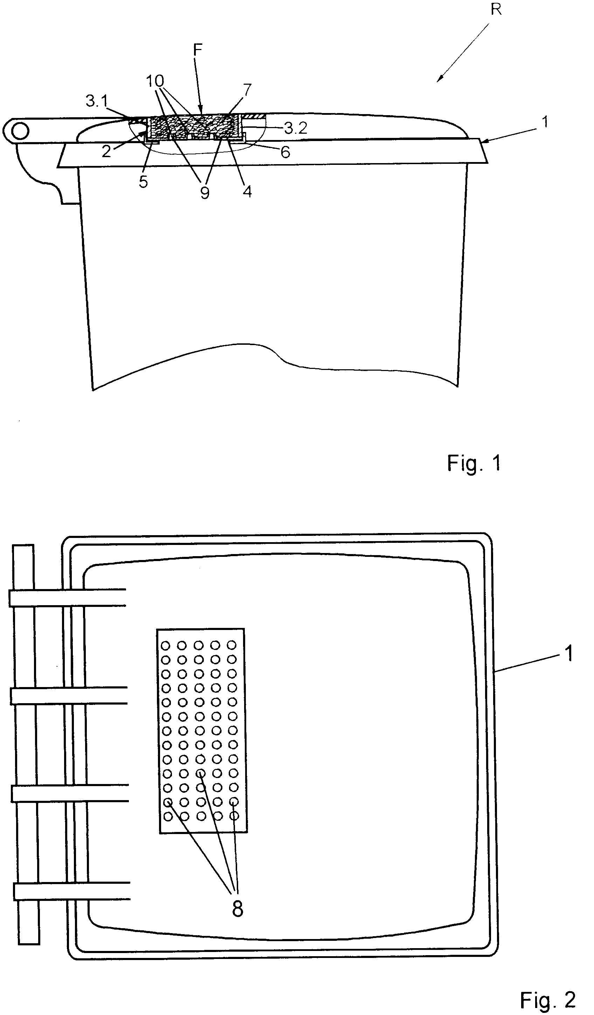

Gemäß Fig. 1 ist einem Deckel 1 eines Abfalleimers R ein Filter F mit einem Gehäuse 2 angesetzt, welches aus vier Seitenwänden 3.1 - 3.4 besteht. Diese Seitenwände 3.1 - 3.4 werden über eine Bodenplatte 4 miteinander verbunden, welche jedoch nicht fest an den Seitenwänden 3.1 - 3.4 festgelegt ist, sondern mittels Rastelementen 5, 6, welche sich an den jeweiligen unteren Randkanten der Seitenwände 3.1 - 3.4 befinden, in seiner Stellung gehalten wird. In diesem Gehäuse 2 befindet sich Filtermaterial 7.

Der Deckel 1 des Abfalleimers R weist Öffnungen 8 zum Gehäuse 2 hin auf. Das Gehäuse 2 wiederum besitzt Öffnungen 9 in der Bodenplatte 4 zum Inneren des Abfalleimers R hin. Diesen Öffnungen 9 der Bodenplatte 4 sind Hülsen 10 zugeordnet, die sich leicht nach innen hochziehen. In Fig. 1 sind diese hochgezogenen Hülsen 10 der Bodenplatte 4 klar ersichtlich, nicht aber die Öffnungen 8 des Deckels 1, da diese als einfache Löcher ohne Hülsen ausgebildet sind. Die Öffnungen 8 des Deckels 1 sind daher in Fig. 2 besser erkennbar.

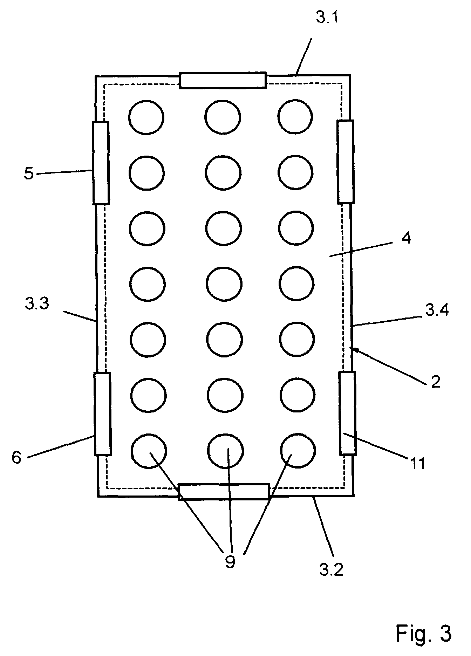

Die Rastelemente 5, 6 bestehen aus einfachen elastischen Streifen, welche an den Seitenwänden 3.1 - 3.4 festliegen und mit einer Rastnase 11 (siehe Fig. 3) die Bodenplatte 4 übergreifen. Sie können zurückgebogen werden, wodurch die Bodenplatte 4 freigegeben wird.

Die Funktionsweise der vorliegenden Erfindung ist folgende:

Von Natur aus neigen insbesondere biologische Abfälle dazu, nach geraumer Zeit der Lagerung in einem abgeschlossenen Raum, im vorliegenden Ausführungsbeispiel einem Abfalleimer, störende Geruchsstoffe zu entwickeln und zu gären. Diese Geruchsstoffe vermischen sich im Abfalleimer R mit der Luft und steigen mit ihr nach oben. Dort tritt die Luft, angereichert mit den Geruchsstoffen, durch die Öffnungen 9 in der Bodenplatte 4 in das Gehäuse 2 ein und durchzieht das Filtermaterial 7.

Das Filtermaterial 7, bestehend aus Aktivkohlegranulat, Wurzelholz od.dgl., absorbiert die Geruchsstoffe aus der nach oben steigenden Luft, die dann aus den Öffnungen 8 des Deckels 1 als Frischluft ausströmt.

Soll das Filtermaterial 7 nach einer gewissen Zeit des Gebrauches ausgetauscht werden, muß die Bodenplatte 4 gelöst werden. Dies geschieht durch leichtes Biegen der Rastelemente 5, 6 nach außen, wodurch die Bodenplatte 4 freigegeben wird, da sie nicht fest an den Seitenwänden 3 festgelegt ist.

Das verbrauchte Filtermaterial 7 wird nun aus dem Gehäuse 2 genommen und anstelle des alten Filtermaterials 7 wird ein neues eingesetzt, wobei das alte Filtermaterial 7 artgerecht entsorgt oder wieder gereinigt werden soll. Befindet sich das neue Filtermaterial 7 in dem Gehäuse 2, so wird die Bodenplatte 4 wieder in ihre alte Lage zwischen die Rastelemente 5, 6 gebracht.

Die oben erwähnten Hülsen 10 um die Öffnungen 9 der Bodenplatte 4 dienen dazu, sich stauendes Wasser, welches, bspw. nach Regenfällen od.dgl., durch die Öffnungen 8 des Deckels 1 eingedrungen ist, daran zu hindern, nach unten in den Abfalleimer R zu fließen, was einen Gärvorgang unterstützen könnte

| **Positionszahlenliste** | | | | | |
|---|---|---|---|---|---|
| 1 | Deckel | 34 | | 67 | |
| 2 | Gehäuse | 35 | | 68 | |
| 3 | Seitenwände | 36 | | 69 | |
| 4 | Bodenplatte | 37 | | 70 | |
| 5 | Rastelement | 38 | | 71 | |
| 6 | Rastelement | 39 | | 72 | |
| 7 | Filtermaterial | 40 | | 73 | |
| 8 | Öffnungen | 41 | | 74 | |
| 9 | Öffnungen | 42 | | 75 | |
| 10 | Hülse | 43 | | 76 | |
| 11 | Rastnase | 44 | | 77 | |
| 12 | | 45 | | 78 | |
| 13 | | 46 | | 79 | |
| 14 | | 47 | | | |
| 15 | | 48 | | R | Abfalleimer |
| 16 | | 49 | | | |
| 17 | | 50 | | F | Filter |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Behältnis zur Aufnahme von insbesondere biologischen Abfallstoffen mit einem Deckel (1) und einem Filter (F),
dadurch gekennzeichnet,
daß an der Innenseite des Deckels (1) ein Gehäuse (2) angebracht ist, welches Filtermaterial (7) beinhaltet und über Öffnungen (9) mit dem Inneren des Behälters und über weitere Öffnungen (8) durch den Deckel (1) hindurch mit der Außenluft in Verbindung steht.

2. Behältnis nach Anspruch 1, dadurch gekennzeichnet, daß das Gehäuse (2) aus vier Seitenwänden (3) besteht.

3. Behältnis nach Anspruch 2, dadurch gekennzeichnet, daß die Seitenwände (3) an ihren jeweiligen unteren Randkanten Rastelemente (5, 6) aufweisen.

4. Behältnis nach Anspruch 2 oder 3, dadurch gekennzeichnet, daß die Seitenwände (3) mittels einer Bodenplatte (4) verbunden sind.

5. Behältnis nach Anspruch 4, dadurch gekennzeichnet, daß die Bodenplatte (4) von den Rastelementen (5, 6) in seiner Lage gehalten ist.

6. Behältnis nach Anspruch 4 oder 5, dadurch gekennzeichnet, daß sich die Öffnungen (9) in der Bodenplatte (4) befinden.

7. Behältnis nach Anspruch 6, dadurch gekennzeichnet, daß die Öffnungen (9) im Inneren des Gehäuses (2) von Hülsen (10) umfangen sind.

8. Behältnis nach wenigstens einem der Ansprüche 1 - 7, dadurch gekennzeichnet, daß das Filtermaterial (7) aus Aktivkohlegranulat, Wurzelholz od.dgl. besteht.

9. Behältnis nach wenigstens einem der Ansprüche 1 - 8, dadurch gekennzeichnet, daß das Filtermaterial (7) austauschbar ist.
